# EUROPEAN PATENT APPLICATION

(11) **EP 4 488 423 A1**
(43) Date of publication of application: **08.01.2025**
(21) Application number: 23461618.3
(22) Date of filing: 04.07.2023
(51) Int. Cl.: C25D 11/26

(54) **A METHOD OF SURFACE MODIFICATION OF TITANIUM BY PRODUCING TITANIUM DIOXIDE NANOTUBES AND DEPOSITING GOLD NANOPARTICLES**

(71) Applicant: Uniwersytet Zielonogórski, 65-417 Zielona Góra (PL)
(72) Inventor: Arkusz, Katarzyna, 64-510 Wronki (PL); Paradowska, Ewa, 65-548 Zielona Gora (PL)
(74) Representative: JD&P Patent Attorneys Joanna Dargiewicz & Partners

(57) **Abstract**

The object of the invention is a method of surface modification of titanium by forming a layer of titanium dioxide nanotubes (TNT) on a titanium substrate using anodisation in a two-electrode system, where the working electrode is a titanium foil and the reference electrode is a platinum foil, where advantageously, the titanium foil with a layer of titanium nanotubes is further chemically modified by electrochemical reduction of the titanium nanotubes to produce and deposit gold nanoparticles.

## Description

The object of the present invention is a method of surface modification of titanium by producing titanium dioxide nanotubes (TNT) and their chemical modification by synthesis and deposition of gold nanoparticles (AuNPs) by electrochemical reduction. This method allows the wettability, surface free energy and stationary potential of TNT to be adjusted.

Canadian patent application CA2633531A1 describes a method of manufacturing a titanium nanotube substrate that includes the steps of anodising the titanium substrate with the formation of self-organising titanium dioxide nanotubes (TiO₂), depositing gold nanoparticles on the titanium dioxide surface, annealing the titanium dioxide surface with gold nanoparticles in a non-oxidising atmosphere and depositing carbon on the annealed titanium dioxide surface.

Chinese patent application CN113096968A reveals a method of preparing nanotubes of anodic TiO₂ doped with metal ions. The matrix layer of titanium dioxide nanotubes and a low melting point metal are annealed together. The deposited metals can be metals with a low melting point lower than 430°C, including tin (Sn, melting point 231.89°C), zinc (Zn, melting point 419.53°C) and cadmium (Cd, melting point 320.90°C).

Chinese patent application CN104722298A presents a method of preparing a composite nano-gold titanium dioxide catalyst. The solid powder obtained is a composite photocatalyst based on titanium dioxide and nano-gold. By using a hydrothermal method to produce it, TiO₂ can be in the form of either nanoparticles or nanotubes.

In a scientific publication: J.M. Macak, F. Schmidt-Stein, P. Schmuki, Efficient oxygen reduction on layers of ordered TiO2 nanotubes loaded with Au nanoparticles, Electrochemistry Communications, Volume 9, Issue 7, July 2007, Pages 1783-1787 it is disclosed a highly beneficial effect of TiO₂ nanotube layers on gold-catalysed oxygen reduction. Au nanoparticles were immobilised on nanotube TiO₂ surfaces and the catalytic activity of the produced matrix was compared with a compact flat gold electrode, as well as with the same charge of Au nanoparticles on a compact flat TiO₂ layer. The catalytic activity was investigated by electrochemical cyclic voltammetry and chronoamperometry.

The aim of the invention was to develop a means of regulating the wettability, surface free energy and stationary potential of titanium dioxide. No documents from the state of the art solve the technical problem indicated above by modifying previously fabricated TiO₂ nanotubes with gold.

This was achieved by a two-step chemical modification of titanium, i.e. the production of titanium dioxide nanotubes (TNT), and a further modification with gold, i.e. gold nanoparticles by electrochemical reduction.

Thus, an object of the invention is a method of surface modification of titanium by forming a layer of TNT titanium dioxide nanotubes on a titanium substrate using anodisation in a two-electrode system, where the working electrode is a titanium film and the reference electrode is a platinum film, comprising the steps of:
- the titanium foil is cleaned in acetone and distilled water in an ultrasonic cleaner and then dried in a stream of nitrogen;
- the titanium dioxide nanotubes with a diameter of 50 ± 7 nm and a length of 1000 ± 68 nm are produced by anodising titanium in an aqueous solution containing 85% ethylene glycol and 0.65 wt% NH₄F, applying a potential of 17 V for 3750 s.

Advantageously, the titanium film with a layer of titanium nanotubes is further chemically modified by electrochemical reduction of the titanium nanotubes to produce and deposit gold nanoparticles, the electrochemical deposition of the gold nanoparticles being performed in a three-electrode system, in which the working electrode is a substrate of titanium dioxide nanotubes, the auxiliary electrode is a platinum grid and the reference electrode is a chlorosilver electrode with a potential of E_{Ag/AgCl} = 0.222 V, the electrolyte is a chloroauric acid solution with a concentration of 0.1 to 10 mM in 0.01 M buffered saline solution, using:
- cyclic voltammetry in the potential range -1.25 V - -0.7 V, using 8 - 80 cycles
   or
- chronoamperometry for a potential of -0.9 V over 60 - 240 s.

Advantageously, titanium foil with a purity of 99.70% is used.

Advantageously, platinum foil of 99.95% purity is used.

Advantageously, the titanium foil is cleaned in acetone and distilled water for 10 minutes each, respectively, in a 300 W ultrasonic cleaner.

Also an object of the invention is a method of imparting superhydrophilic properties to the titanium surface as defined above, wherein titanium nanotubes with a diameter of 50 ± 7 nm and a length of 1000 ± 68 nm are produced by modifying the titanium by anodising in an aqueous solution containing 85% by weight ethylene glycol and 0.65% by weight. NH₄F, applying a potential of 17 V for 3750 s, which titanium nanotubes are further chemically modified by electrochemical reduction of TNT to produce and deposit gold nanoparticles by:
- cyclic voltammetry in the potential range -1.25 V - -0.7 V, in a solution of 0.1 mM HAuCl₄ , using 8 - 80 cycles
   or
- chronoamperometry for a potential of -0.9 V in a solution of 0.1 mM HAuCl₄ for 60-240 s.

Also an object of the invention is a method of imparting a negative surface charge to the titanium surface relative to the Ag/AgCI chlorosilver electrode defined above, wherein:
- a layer of titanium dioxide nanotubes with a diameter of 50 ± 7 nm and a length of 1000 ± 68 nm is produced on the titanium surface by anodising titanium in an aqueous solution containing 85% ethylene glycol and 0.65 wt% NH₄F, applying a potential of 17 V for 3750 s;
   or
- a layer of titanium dioxide nanotubes with a diameter of 50 ± 7 nm and a length of 1000 ± 68 nm is produced on the titanium surface by anodising titanium in an aqueous solution containing 85% ethylene glycol and 0.65 wt% NH₄F, applying a potential of 17 V for 3750 s and depositing gold nanoparticles on this surface by cyclic voltammetry in the potential range: -1.25 - -0.7 V, using an electrolyte of 0.1 mM HAuCl₄ , for 8 - 80 cycles;
   or
- a layer of titanium dioxide nanotubes with a diameter of 50 ± 7 nm and a length of 1000 ± 68 nm is produced on the titanium surface by anodising titanium in an aqueous solution containing 85% ethylene glycol and 0.65 wt% NH₄F, applying a potential of 17 V for 3750 s and depositing gold nanoparticles on this surface by chronoamperometry at a potential of -0.9 V in either 0.1 or 10 mM HAuCl electrolyte₄ for 60 - 240 s.

A further object of the invention is a method of imparting a positive surface charge to a titanium surface with an open circuit potential (OCP) of more than 0 mV relative to an Ag/AgCI chlorosilver electrode as defined above, wherein:
- a layer of titanium dioxide nanotubes with a diameter of 50 ± 7 nm and a length of 1000 ± 68 nm is produced on the titanium surface by anodising titanium in an aqueous solution containing 85% ethylene glycol and 0.65 wt% NH₄F, applying a potential of 17 V for 3750 s and depositing gold nanoparticles on this surface by cyclic voltammetry in the potential range: -1.25 - -0.7 V, using an electrolyte of 0.1 mM-10 mM HAuCl₄, for 8- 80 cycles;
- a layer of titanium dioxide nanotubes with a diameter of 50 ± 7 nm and a length of 1000 ± 68 nm is produced on the titanium surface by anodising titanium in an aqueous solution containing 85% ethylene glycol and 0.65 wt% NH₄F, applying a potential of 17 V for 3750 s and depositing gold nanoparticles on this surface by chronoamperometry at a potential of -0.9 V in an electrolyte of 10 mM HAuCl₄ for 60 s.

The object of the invention is shown in the figures, where:

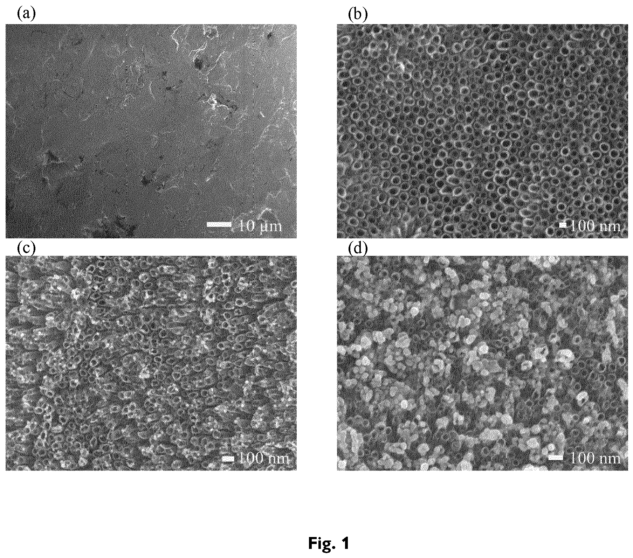

Fig. 1 shows SEM images of the surface of pure titanium - Ti (a), coated with TiO₂ nanotubes - TNT (b), TNT with deposited AuNPs/TNT gold nanoparticles by cyclic voltammetry - potential range: -1.25 ÷ -0.7 V, electrolyte: 0.1 mM HAuCl₄, 40 cycles (c) and by chronoamperometry - potential: -0.9 V, electrolyte: 10 mM HAuCl₄ , time: 60 s (d).

The invention relates to a method of surface modification of titanium by producing titanium dioxide nanotubes (TNT) with a well-defined morphology and applying chemical modification by deposition of gold nanoparticles. The developed method of surface modification of titanium allows control over a wide range of physico-chemical properties of titanium, such as surface wettability and stationary potential measured in artificial plasma PBS solution. The fabricated layer is composed of homogeneous, vertically aligned titanium (IV) oxide nanotubes on a substrate with a height of 1000 ± 68 nm and a circular base with a diameter of 50 ± 7 nm.

This layer is formed by anodising in an ethylene glycol solution with the addition of ammonium fluoride. In the following, the description of the invention shows the relationship between the titanium substrate with TNT nanotubes modified with gold nanoparticles, and the wettability, surface free energy and stationary potential of the film formed on the titanium substrate.

The TiO₂ nanotube layer is the subject of research by many scientists to determine the physico-chemical properties and potential application mainly in medicine. The uniqueness of the developed method of fabrication and thermal modification lies in its adjustability:
- wettability - from hydrophobic to superhydrophilic surfaces, and
- stationary potential in artificial plasma solution - from strongly negative values to positive values over a very wide range.

These properties allow TNT to be used in a variety of industries, particularly in biomedical engineering as an osteosynthesis-regulating layer, antibacterial layer or coating for urological catheters.

In order to produce a layer of titanium dioxide nanotubes (TNT) on a titanium substrate, anodisation was performed in a two-electrode system, where the working electrode was a titanium foil with a purity of 99.70% and a thickness of 0.25 mm, and the reference electrode was a platinum foil with a size of 20 x 15 x 0.25 mm and a purity of 99.95%.

The titanium foil was cut into 15 (height) x 5 (width) x 0.25 (thickness) mm samples and then subjected to cleaning in acetone and distilled water for 10 minutes each, respectively, in a 300 W ultrasonic cleaner.

After cleaning, the titanium substrates were dried in a stream of nitrogen.

The anodising process was carried out by applying a potential of 17 V for 3750 s. The electrolyte consisted of an aqueous solution containing 85 wt% ethylene glycol with 0.65 wt% ammonium fluoride. The samples were then chemically modified by the production and deposition of gold nanoparticles (AuNPs) by electrochemical reduction.

Electrochemical deposition of AuNPs was performed in a three-electrode system, where the working electrode (WE) was a titanium dioxide nanotube substrate, the counter electrode (CE) was a platinum grid and the reference electrode (RE) was a chlorosilver electrode (E_{Ag/AgCl} = 0.222 V). The electrolyte was a solution of chloro-silicic acid at different concentrations depending on the method used, prepared in 0.01 M phosphate-buffered saline (PBS).

The deposition process by cyclic voltammetry (CV) was carried out in the potential range from - 1.25 V to -0.70 V (relative to the chlorosilver electrode E_{Ag/AgCl} = 0.222 V) with a rate of change of EC potential relative to RE equal to 50 mV/s for different numbers of cycles (8, 20, 40, 60, 80) and chloroauric acid concentrations of 0.1 - 10 mM in 0.01 M PBS.

Deposition of AuNPs on TNT by chronoamperometry (CA) was performed at a potential of -0.9 V in 1 and 10 mM HAuCl solution₄ in 0.01 M PBS, for different deposition times of 60 s - 240 s.

A field emission scanning microscope (FESEM, JEOL JSM-7600F) was used to study the morphology of the TNTs produced, with diameter and height values determined.

Wettability tests were conducted using a Klimatest PG-3 goniometer.

Open circuit potential (open circuit potential, OCP) measurements were carried out in 0.01 M buffered saline in a three-electrode system, in which the reference electrode was a chlorosilver electrode.

The hydrophilicity of titanium was increased by modification with titanium nanotubes and gold nanoparticles to obtain a **superhydrophilic surface** (no water droplets form on the superhydrophilic surface, but a uniform layer of water), which was obtained by:
- anodising of titanium foil to produce TNT with a diameter of 50 ± 7 nm and a length of 1000 ± 68 nm in an aqueous solution containing 85 wt% ethylene glycol and 0.65 wt% NH₄F, applying a potential of 17 V for 3750 s and then
- electrochemical reduction of TNT to produce and deposit gold nanoparticles by:
- cyclic voltammetry in the potential range -1.25 V - -0.7 V, in a solution of 0.1 mM HAuCl₄, using 8 - 80 cycles
   or
- chronoamperometry for a potential of -0.9 V in a solution of 1 mM HAuCl₄ for 60 - 240 s.

Furthermore, after chemical modification, the **surface charge** of titanium (-465 ± 5 mV) was adjusted using the following conditions:

### (a) Negative surface charge (OCP vs. Ag/AgCI) by:

▪ producing a TNT layer on the titanium surface with a diameter of 50 ± 7 nm and a length of 1000 ± 68 nm by anodising titanium in an aqueous solution containing 85% ethylene glycol and 0.65 wt% NH₄F, applying a potential of 17 V for 3750 s;
▪ producing a TNT layer on the titanium surface with a diameter of 50 ± 7 nm and a length of 1000 ± 68 nm by anodising titanium in an aqueous solution containing 85% ethylene glycol and 0.65 wt% NH₄F, applying a potential of 17 V for 3750 s and depositing gold nanoparticles on this surface by cyclic voltammetry in the potential range: -1.25 - -0.7 V, using an electrolyte of 0.1 mM HAuCl₄ , for a number of 8 cycles;
▪ producing a TNT layer on the titanium surface with a diameter of 50 ± 7 nm and a length of 1000 ± 68 nm by anodizing titanium in an aqueous solution containing 85% ethylene glycol and 0.65 wt% NH₄F, applying a potential of 17 V for 3750 s and depositing gold nanoparticles on this surface by chronoamperometry at a potential of -0.9 V in an electrolyte of 1 mM HAuCl₄ for 60 - 240 s.

### (b) Positive surface charge (OCP>0 mV) by:

▪ producing a TNT layer on the titanium surface with a diameter of 50 ± 7 nm and a length of 1000 ± 68 nm by anodising titanium in an aqueous solution containing 85% ethylene glycol and 0.65 wt% NH₄F, applying a potential of 17 V for 3750 s and depositing gold nanoparticles on this surface by cyclic voltammetry in the potential range: -1.25 - -0.7 V, using an electrolyte of 0.1 mM - 10 mM HAuCl₄ , for 8 - 80 cycles;
▪ producing a TNT layer on the titanium surface with a diameter of 50 ± 7 nm and a length of 1000 ± 68 nm by anodizing titanium in an aqueous solution containing 85% ethylene glycol and 0.65 wt% NH₄F, applying a potential of 17 V for 3750 s and depositing gold nanoparticles on this surface by chronoamperometry at a potential of- 0.9 V in an electrolyte of 10 mM HAuCl₄ for 60 s.

**Table 1. Examples of thermal/chemical modification conditions of titanium in the anodising process to regulate surface wettability**

| **Forming conditions** | **WCA [°]** | **Surface free energy Eₛₑ [mj/m²]** |
|---|---|---|
| Pure titanium | 56 ± 1 | 39,6 ÷ 41,8 |
| TNT manufactured in 85% ethylene glycol + 0.6 wt% NH₄F, voltage: 17 V, time: 3750 s. | 20 ± 2 | 67,5 ÷ 69,2 |
| TNT manufactured in 85% ethylene glycol + 0.6 wt% NH₄F, voltage: 17 V, time: 3750 s | 12 ± 1 | 70,9 ÷ 71.5 |
| Chemical modification: chronoamperometry, potential -0.9 V, electrolyte: 1 mM HAuCl₄, time: 60 s. | | |
| TNT manufactured in 85% ethylene glycol + 0.6 wt% NH₄F, voltage: 17 V, time: 3750 s. | 8 ± 1 | 71,9 ÷ 72,3 |
| Chemical modification: cyclic voltammetry, potential range: - 1.25 ÷ -0.7 V, electrolyte: 0.1 mM HAuCl₄, 40 cycles. | | |

**Table 2. Examples of chemical modification conditions for titanium in the anodising process allowing the regulation of the stationary potential in buffered saline solution**

| **Forming conditions** | **OCP [mV vs. Ag/AgCl]**. |
|---|---|
| Pure titanium | -465 ± 5 |
| TNT manufactured in 85% ethylene glycol + 0.6 wt% NH₄F, voltage: 17 V, time: 3750 s. | -160 ± 10 |

| negative surface charge (OCP <0 mV vs. Ag/AgCl) | |
|---|---|
| TNT manufactured in 85% ethylene glycol + 0.6 wt% NH₄F, voltage: 17 V, time: 3750 s. | -48 ± 4 |
| Chemical modification: cyclic voltammetry, potential range: -1.25 ÷ -0.7 V, electrolyte: 0.1 mM HAuCl₄, 8 cycles. | |
| TNT manufactured in 85% ethylene glycol + 0.6 wt% NH₄F, voltage: 17 V, time: 3750 s. | -39 ± 3 |
| Chemical modification: chronoamperometry, potential: -0.9 V, electrolyte: 1 mM HAuCl₄, time: 60 s. | |
| TNT manufactured in 85% ethylene glycol + 0.6 wt% NH₄F, voltage: 17 V, time: 3750 s. | -17 ± 3 |
| Chemical modification: chronoamperometry, potential: -0.9 V, electrolyte 1 mM HAuCl₄, time: 120 s. | |
| TNT manufactured in 85% ethylene glycol + 0.6 wt% NH₄F, voltage: 17 V, time: 3750 s. | -11 ± 7 |
| Chemical modification: chronoamperometry, potential: -0.9 V, electrolyte: 1 mM HAuCl₄, time: 240 s. | |
| TNT manufactured in 85% ethylene glycol + 0.6 wt% NH₄F, voltage: 17 V, time: 3750 s. | -8 ± 1 |
| Chemical modification: chronoamperometry, potential: -0.9 V, electrolyte: 1 mM HAuCl₄, time: 180 s. | |

| positive surface charge (OCP>0 mV) | |
|---|---|
| TNT manufactured in 85% ethylene glycol + 0.6 wt% NH₄F, voltage: 17 V, time: 3750 s. | 20 ± 13 |
| Chemical modification: cyclic voltammetry, potential range: -1.25 ÷ -0.7 V, electrolyte: 0.1 mM HAuCl₄, 20 cycles. | |
| TNT manufactured in 85% ethylene glycol + 0.6 wt% NH₄F, voltage: 17 V, time: 3750 s. | 25 ± 8 |
| Chemical modification: cyclic voltammetry, potential range: -1.25 ÷ -0.7 V, electrolyte: 0.1 mM HAuCl₄, 40 cycles. | |
| TNT manufactured in 85% ethylene glycol + 0.6 wt% NH₄F, voltage: 17 V, time: | 34 ± 5 |
| 3750 s. | |
| Chemical modification: chronoamperometry, potential: -0.9 V, electrolyte: 1 mM HAuCl₄, time: 180 s. | |
| TNT manufactured in 85% ethylene glycol + 0.6 wt% NH₄F, voltage: 17 V, time: 3750 s. | 40 ± 8 |
| Chemical modification: cyclic voltammetry, potential range: -1.25 ÷ -0.7 V, electrolyte: 0.1 mM HAuCl₄, 60 cycles. | |
| TNT manufactured in 85% ethylene glycol + 0.6 wt% NH₄F, voltage: 17 V, time: 3750 s. | 49 ± 1 |
| Chemical modification: cyclic voltammetry, potential range: -1.25 ÷ -0.7 V, electrolyte 0.1 mM HAuCl₄, 80 cycles. | |
| TNT manufactured in 85% ethylene glycol + 0.6 wt% NH₄F, voltage: 17 V, time: 3750 s. | 51 ± 1 |
| Chemical modification: cyclic voltammetry, potential range: -1.25 ÷ -0.7 V, electrolyte: 1 mM HAuCl₄, 40 cycles. | |
| TNT manufactured in 85% ethylene glycol + 0.6 wt% NH₄F, voltage: 17 V, time: 3750 s. | 63 ± 3 |
| Chemical modification: chronoamperometry, potential -0.9 V, electrolyte: 10 mM HAuCl₄, time: 60 s. | |
| TNT manufactured in 85% ethylene glycol + 0.6 wt% NH₄F, voltage: 17 V, time: 3750 s. | 93 ± 1 |
| Chemical modification: cyclic voltammetry, potential range: -1.25 ÷ -0.7 V, electrolyte: 5 mM HAuCl₄, 40 cycles. | |
| TNT manufactured in 85% ethylene glycol + 0.6 wt% NH₄F, voltage: 17 V, time: 3750 s. | 110 ± 1 |
| Chemical modification: cyclic voltammetry, potential range: -1.25 ÷ -0.7 V, electrolyte: 10 m M HAuCl₄, 40 cycles. | |

## Claims

1. A method of surface modification of titanium by forming a layer of TNT titanium dioxide nanotubes on a titanium substrate using anodization in a two-electrode system, wherein the working electrode is a titanium foil and the reference electrode is a platinum foil, comprising the steps of:
- the titanium foil is cleaned in acetone and distilled water in an ultrasonic cleaner and then dried in a stream of nitrogen;
- the titanium dioxide nanotubes with a diameter of 50 ± 7 nm and a length of 1000 ± 68 nm are produced by anodising titanium in an aqueous solution containing 85% ethylene glycol and 0.65 wt% NH₄F, applying a potential of 17 V for 3750 s.

2. The method according to claim 1, wherein the titanium film with a layer of titanium dioxide nanotubes is further chemically modified by electrochemical reduction of titanium nanotubes to produce and deposit gold nanoparticles, the electrochemical deposition of gold nanoparticles being performed in a three-electrode system, in which the working electrode is a substrate of titanium dioxide nanotubes, the auxiliary electrode is a platinum grid and the reference electrode is a chlorosilver electrode with a potential of E_{Ag/AgCl} = 0.222 V, the electrolyte is a chloroauric acid solution with a concentration of 0.1 to 10 mM in 0.01 M buffered saline solution, using:
- cyclic voltammetry in the potential range -1.25 V - -0.7 V, using 8 - 80 cycles
or
- chronoamperometry for a potential of -0.9 V over 60 - 240 s.

3. The method according to claim 1 or 2, wherein a titanium foil having a purity of 99.70% is used.

4. The method according to claim 1 or 2 or 3, wherein a platinum film having a purity of 99.95% is used.

5. The method according to any of the claims 1-4, wherein the titanium foil is cleaned in acetone and distilled water for 10 minutes each, respectively, in an ultrasonic cleaner of 300 W

6. A method of imparting superhydrophilic properties to the surface of titanium as defined in any of the claims 1-5, wherein titanium nanotubes with a diameter of 50 ± 7 nm and a length of 1000 ± 68 nm are produced by modifying the titanium by anodising in an aqueous solution containing 85 wt% ethylene glycol and 0.65 wt% NH₄F, applying a potential of 17 V for 3750 s, which titanium nanotubes are further chemically modified by electrochemical reduction of TNT to produce and deposit gold nanoparticles by:
- cyclic voltammetry in the potential range -1.25 V - -0.7 V, in a solution of 0.1 mM HAuCl₄ , using 8 - 80 cycles
or
- chronoamperometry for a potential of -0.9 V in a solution of 0.1 mM HAuCl₄ for 60 - 240 s.

7. A method of imparting a negative surface charge to a titanium surface relative to an Ag/AgCI chlorosilver electrode as defined in any of claims 1-5, wherein:
- a layer of titanium dioxide nanotubes with a diameter of 50 ± 7 nm and a length of 1000 ± 68 nm is produced on the titanium surface by anodising titanium in an aqueous solution containing 85% ethylene glycol and 0.65 wt% NH₄F, applying a potential of 17 V at 3750 s;
or
- a layer of titanium dioxide nanotubes with a diameter of 50 ± 7 nm and a length of 1000 ± 68 nm is produced on the titanium surface by anodising titanium in an aqueous solution containing 85% ethylene glycol and 0.65 wt% NH₄F, applying a potential of 17 V for 3750 s and depositing gold nanoparticles on this surface by cyclic voltammetry in the potential range: -1.25 - -0.7 V, using an electrolyte of 0.1 mM HAuCl₄ , for 8 - 80 cycles;
or
- a layer of titanium dioxide nanotubes with a diameter of 50 ± 7 nm and a length of 1000 ± 68 nm is produced on the titanium surface by anodising titanium in an aqueous solution containing 85% ethylene glycol and 0.65 wt% NH₄F, applying a potential of 17 V for 3750 s and deposited gold nanoparticles on this surface by chronoamperometry at a potential of -0.9 V in either 0.1 or 10 mM HAuCl electrolyte₄ for 60 - 240 s.

8. A method of imparting a positive surface charge to a titanium surface with an OCP open-circuit potential of more than 0 mV relative to an Ag/AgCI chlorosilver electrode as defined in any of the claims 1-5, wherein:
- a layer of titanium dioxide nanotubes with a diameter of 50 ± 7 nm and 1000 ± 68 nm in length by anodising titanium in an aqueous solution containing 85% ethylene glycol and 0.65 wt% NH₄F, applying a potential of 17 V for 3750 s and deposit gold nanoparticles on this surface by cyclic voltammetry in the potential range: -1.25 - -0.7 V, using an electrolyte of 0.1 mM-10 mM HAuCl₄, for 8-80 cycles;
- a layer of titanium dioxide nanotubes with a diameter of 50 ± 7 nm and 1000 ± 68 nm in length by anodizing titanium in an aqueous solution containing 85% ethylene glycol and 0.65 wt% NH₄F, applying a potential of 17 V for 3750 s and depositing gold nanoparticles on this surface by chronoamperometry at a potential of -0.9 V in an electrolyte of 10 mM HAuCl₄ for 60 s.
